(19) Europäisches Patentamt / European Patent Office / Office européen des brevets

(11) **EP 4 773 243 A1**

(12) **EUROPEAN PATENT APPLICATION**

(43) Date of publication:
08.07.2026 Bulletin 2026/28

(21) Application number: 25222571.9

(22) Date of filing: 11.12.2025

(51) International Patent Classification (IPC):
*H01M 4/58* (2010.01)    *H01M 4/04* (2006.01)
*H01M 4/139* (2010.01)    *H01M 10/052* (2010.01)

(52) Cooperative Patent Classification (CPC):
**H01M 4/0404; H01M 4/0435; H01M 4/139;
H01M 4/5825; H01M 10/052;** H01M 2004/021;
H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 23.12.2024  CN 202411906937

(71) Applicant: **AESC Japan Ltd.**
**Yokohama-shi, Kanagawa 220-0012 (JP)**

(72) Inventor: **ZHANG, Xiangni**
**Jiangyin City, Wuxi City, 214443 (CN)**

(74) Representative: **Becker, Eberhard**
**Becker Kurig & Partner**
**Patentanwälte mbB**
**Bavariastraße 7**
**80336 München (DE)**

(54) **POSITIVE ELECTRODE SHEET, METHODS FOR DESIGNING AND EVALUATING PERFORMANCE OF THE SAME, ELECTRODE ASSEMBLY, AND SECONDARY BATTERY**

(57)     A positive electrode sheet, methods for designing and evaluating performance of the same, an electrode assembly, and a secondary battery belonging to the technical field of power batteries are provided. The positive electrode sheet includes a positive current collector and a positive active material layer on at least one side of the positive current collector. The positive active material layer satisfies the following relational expression:
$0.97(FD+D_{v50}{}^2 \cdot LT \cdot \mu^{1/2}/20) \leq PD \leq FD+D_{v50}{}^2 \cdot LT \cdot \mu^{1/2}/20$.

A new feasible solution for designing a positive electrode sheet is provided. The rationality of positive electrode sheet design and material utilization are improved, a reliable supporting solution for material selection is provided, resources required for electrode sheet verification is saved, and development efficiency is enhanced. The solution is suitable for application in actual processing and design of a secondary battery.

**Description**

**BACKGROUND**

Technical Field

The disclosure relates to the technical field of power batteries, and in particular, relates to a positive electrode sheet, methods for designing and evaluating performance of the same, an electrode assembly, and a secondary battery.

Description of Related Art

In the manufacturing process of a lithium-ion battery, the compaction density of the positive electrode sheet has a significant impact on the performance of the battery. Generally, compaction density is closely related to the specific capacity, efficiency, and internal resistance of the electrode sheet as well as the cycling performance of the battery, so finding the optimal compaction density is important for battery design. Under normal circumstances, within the compaction range allowed by the material, the greater the compaction density of the electrode sheet, the higher the battery capacity can be achieved, so the compaction density is also regarded as one of the reference indicators for material energy density. However, blindly pursuing high compaction density is not the optimal strategy because doing so cannot guarantee an increase in the battery's specific capacity, but may instead seriously reduce the battery's specific capacity and cycle performance. As compaction density increases, the compression force among material particles will strengthen, leading to reduced porosity of the electrode sheet, increased processing difficulty, and decreased yield. In this situation, the electrode sheet's ability to absorb electrolyte will decrease, resulting in insufficient electrolyte wetting, making it difficult for the electrolyte to fully wet the electrode sheet. This insufficient wetting will directly affect the specific capacity performance of the material, causing the electrolyte retention ability of the battery to decline. Meanwhile, during battery cycling, due to insufficient electrolyte wetting, the polarization phenomena will become more severe, so that battery degradation will be accelerated, and the increase in internal resistance will also be more significant. Therefore, the rationality of compaction density of the positive electrode sheet has a significant impact on the processing and electrochemical performance of the finished secondary battery.

At present, there are many parameters that affect the compaction density of the positive electrode sheet, such as the true density, morphology, and particle size distribution of the positive electrode material, as well as the process parameters for preparing the positive electrode sheet, such as the surface density of the electrode sheet and the usage amounts of the binder and the conductive agent. However, due to the excessive number of parameters affecting the compaction density of the electrode sheet, product design can only obtain corresponding compaction density values through multiple rounds of experiments, resulting in resource waste and low efficiency.

**SUMMARY**

In view of the above-mentioned shortcomings of the related art, the disclosure aims to provide a positive electrode sheet, methods of designing and evaluating performance of the same, an electrode assembly, and a secondary battery, through which by analyzing the relationship between parameters such as the powder compaction density at the material level, the powder particle size, the electrode sheet elongation rate, and the slurry viscosity and the electrode sheet compaction density, a corresponding formula that can directly convert from powder compaction density to electrode sheet compaction density is obtained, so that a positive electrode sheet with a reasonable positive electrode active layer compaction density can be provided, the technical problem of the battery electrochemical performance degradation caused by unreasonable positive electrode sheet compaction density design is solved, a reasonable, simple, and effective design solution for the positive electrode active layer compaction density of the positive electrode sheet is provided, resources required for electrode sheet verification are saved, and development efficiency is improved.

To achieve the above and other related purposes, the disclosure provides a positive electrode sheet including a positive current collector and a positive active material layer on at least one side of the positive current collector. The positive active material layer satisfies the following relational expression:
$$0.97(FD+D_{v50}^2*LT*\mu^{1/2}/20)\leq PD\leq FD+D_{v50}^2*LT*\mu^{1/2}/20,$$
where PD is a compaction density of the positive active material layer in g/cc, FD is a powder compaction density of an active material in the positive active material layer in g/cc, $D_{v50}$ is a value below which 50% of a powder particle size of the active material in the positive active material layer is less than or equal to in μm, LT is a length direction elongation rate of the positive electrode sheet under 15 tons of pressure in percentage, and μ is a viscosity of a slurry used for preparing the positive active material layer in k.Pa.s.

Further, the FD is 2.4 g/cc to 2.6 g/cc.

Further, the $D_{v50}$ is 0.6 μm to 1.2 μm.

Further, the LT≤1%.

Further, the μ is 3 k.Pa.s to 10 k.Pa.s.

The disclosure further provides a method for designing a positive electrode sheet, and at least the following steps are included.

An active material is prepared into a slurry, the slurry is coated on at least one side of a positive current collector, the slurry is dried and roll pressed to form a positive electrode sheet, and a current compaction density of a positive active material layer on the positive electrode sheet is measured and calculated.

Based on a powder compaction density and a powder particle size of the active material, a viscosity of the slurry, and a length direction elongation rate of the positive electrode sheet under 15 tons of pressure, a target compaction density of the positive active material layer on the positive electrode sheet is calculated according to the following relational expression:

$$PD=FD+D_{v50}^2*LT*\mu^{1/2}/20,$$

where PD is a compaction density of the positive active material layer in g/cc, FD is the powder compaction density of the active material in the positive active material layer in g/cc, $D_{v50}$ is a value below which 50% of a powder particle size of the active material in the positive active material layer is less than or equal to in μm, LT is the length direction elongation rate of the positive electrode sheet under 15 tons of pressure in percentage, and μ is the viscosity of the slurry used for preparing the positive active material layer in k.Pa.s.

According to the current compaction density of the positive active material layer and comparing it with the target compaction density, process parameters for preparing the positive electrode sheet are adjusted based on a comparison result until the current compaction density of the positive active material layer reaches 97% to 100% of the target compaction density.

Further, the method for designing the positive electrode sheet further includes the following step. The active material is selected according to a predetermined powder compaction density requirement and/or a predetermined powder particle size requirement.

Further, the method for designing the positive electrode sheet further includes the following step. The active material is prepared into the slurry according to a predetermined viscosity requirement.

Further, the method for designing the positive electrode sheet further includes the following step. The active material is prepared into the slurry, the slurry is coated on at least one side of the positive current collector, and the slurry is dried and roll pressed into the positive electrode sheet according to a predetermined length direction elongation rate requirement.

Further, the method for designing the positive electrode sheet further includes the following step. According to a current length direction elongation rate of the positive electrode sheet under 15 tons of pressure and comparing it with a predetermined length direction elongation rate, the process parameters for preparing the positive electrode sheet are adjusted based on a comparison result until the current compaction density of the positive active material layer reaches 97% to 100% of the target compaction density.

Further, the process parameters for preparing the positive electrode sheet include at least one of the following parameters: a rolling pressure, a rolling thickness, and a coating surface density.

The disclosure further provides an electrode assembly including the positive electrode sheet as described above or a positive electrode sheet designed by the method as described above.

The disclosure further provides a secondary battery including the electrode assembly as described above.

The disclosure further provides a method for evaluating performance of a positive electrode sheet including a positive current collector and a positive active material layer on at least one side of the positive current collector. A theoretical compaction density (hereinafter referred to as theoretical PD) of the positive active material layer is calculated according to the following relational expression, a current compaction density of the positive active material layer on the positive electrode sheet is measured and calculated, the performance of the positive electrode sheet is determined to be good if the current compaction density reaches 97% to 100% of the theoretical compaction density, and the performance of the positive electrode sheet is determined to be poor if the current compaction density does not reach or exceeds 97% to 100% of the theoretical compaction density:

$$PD=FD+D_{v50}^2*LT*\mu^{1/2}/20,$$

where PD is a compaction density of the positive active material layer in g/cc, FD is a powder compaction density of an active material in the positive active material layer in g/cc, $D_{v50}$ is a powder particle size of the active material in the positive active material layer in μm, LT is a length direction elongation rate of the positive electrode sheet under 15 tons of pressure in percentage, and μ is a viscosity of a slurry used for preparing the positive active material layer in k.Pa.s.

As described above, the positive electrode sheet, the methods for designing and evaluating the performance of the same, the electrode assembly, and the secondary battery exhibit the following beneficial effects.

The disclosure provides a positive electrode sheet, which, for any active material and positive active slurry, enables the prepared positive electrode sheet to exhibit balanced performance in flexibility, breakage, and peeling force and exhibit enhanced processability and safety and improved wettability to the electrolyte. The secondary battery is thus enabled to have good electrochemical performance. In the disclosure, by analyzing the relationship between the powder compaction density at the material level and the electrode sheet compaction density, a corresponding formula that can directly convert from FD, $D_{v50}$, LT, and $\mu$ to PD is obtained, that is:

$$0.97(FD+D_{v50}{}^2*LT*\mu^{1/2}/20)\leq PD\leq FD+D_{v50}{}^2*LT*\mu^{1/2}/20.$$

Based on this formula, the optimal PD value that satisfies the balanced performance of the positive electrode sheet in flexibility, breakage, and peeling force may be predicted in advance, so that the electrode sheet preparation process can be quickly adjusted, and development, verification, and mass production efficiency can be effectively improved.

## DESCRIPTION OF THE EMBODIMENTS

The implementation of the disclosure is illustrated in the following paragraphs by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

In the disclosure, unless otherwise specified, the term "plurality" means two or more.

The character "/" indicates an "or" relationship between the preceding and following objects. For instance, A/B means: A or B.

The term "and/or" is an associative relationship describing objects, indicating that three relationships may exist. For instance, A and/or B means: A or B, or A and B, these three relationships.

In the exploration process of a rational design scheme for the compaction of the positive electrode sheet of a lithium-ion battery, the inventor of the present application has discovered that the powder compaction density of the positive active material has a significant impact on the compaction density of the electrode sheet, and a certain corresponding relationship is provided between the two. However, due to the excessive number of parameters affecting the compaction density of the electrode sheet, powder compaction density cannot directly correspond to the compaction density of the electrode sheet. Further, there is currently no simple and effective technical solution to directly convert from the powder compaction density to the compaction density of the electrode sheet. To solve this problem, the inventor of the present application has conducted an analytical research on the relevant factors affecting the compaction density of the electrode sheet and has discovered that parameters having significant impact on the compaction density of the positive electrode sheet include not only powder compaction density, but also material particle size, electrode sheet elongation rate, and slurry viscosity. The inventor has also determined the conversion formulas among powder compaction density, material particle size, electrode sheet elongation rate, slurry viscosity, and compaction density of the electrode sheet. Based on this research achievement, the disclosure provides the following technical solutions.

An embodiment of the disclosure provides a positive electrode sheet including a positive current collector and a positive active material layer on at least one side of the positive current collector. The positive active material layer satisfies the following relational expression (1):

$$0.97(FD+D_{v50}{}^2*LT*\mu^{1/2}/20)\leq PD\leq FD+D_{v50}{}^2*LT*\mu^{1/2}/20 \qquad (1),$$

where PD is a compaction density of the positive active material layer in g/cc, FD is a powder compaction density of an active material in the positive active material layer in g/cc, $D_{v50}$ is a value below which 50% of a powder particle size of the active material in the positive active material layer is less than or equal to in $\mu$m, LT is a length direction elongation rate of the positive electrode sheet under 15 tons of pressure in percentage, and $\mu$ is a viscosity of a slurry used for preparing the positive active material layer in k.Pa.s.

The positive electrode sheet satisfying this relational expression may exhibit balanced performance in flexibility, breakage, and peeling force, and also has high processability and safety. The wettability to electrolyte may also be improved, so that a secondary battery is enabled to exhibit good cycling performance, and battery performance is thus improved.

It should be noted that the compaction density of the electrode sheet refers to a ratio of a surface density to a material thickness, and its calculation equation is: compaction density = surface density/material thickness. In the design of the positive electrode sheet of the lithium-ion battery, the positive current collector generally uses a pure metal foil material or a polymer composite metal foil material. Considering the rolling of the electrode sheet, the metal foil material has elongation. Therefore, PD in the disclosure, i.e., the compaction density of the positive active material layer, may be calculated according to the following equations:

$$PD = \frac{coating\ surface\ density\ after\ rolling}{thickness\ of\ electrode\ sheet\ after\ rolling - thickness\ of\ current\ collector\ after\ rolling},$$

coating surface density $$coating\ surface\ density\ after\ rolling = \frac{coating\ surface\ density}{1 + foil\ material\ elongation\ rate}\quad and,$$

$$thickness\ of\ the\ current\ collector\ after\ rolling = \frac{original\ thickness\ of\ foil}{1 + foil\ material\ elongation\ rate}.$$

Powder compaction density refers to a ratio of mass to volume occupied after a powder sample is compacted under a certain pressure, which is the ratio of powder mass after compression to powder volume after compression. The FD in the disclosure, i.e., the powder compaction density of the active material in the positive active material layer, may be performed according to GB/T 44330-2024 "Positive electrode materials for lithium-ion batteries - Determination of powder compaction density".

In a preparation process of the positive electrode sheet, stretching methods such as rolling are used to provide a specific extensibility to adapt to the expansion and contraction of the positive electrode material during a charge and discharge processes. Elongation rate refers to the ability of an electrode sheet to deform without breaking when subjected to an external force. The electrode sheet elongation rate may be calculated by measuring a length change of the electrode sheet before and after rolling or by testing the mass change of the electrode sheet before and after rolling LT in the disclosure, i.e., the length direction elongation rate of the positive electrode sheet under 15 tons of pressure, is a ratio of a length change of the electrode sheet after rolling to its original length, which may be specifically calculated according to the following equation:

$$LT = \frac{length\ of\ electrode\ sheet\ before\ rolling - length\ of\ electrode\ sheet\ after\ rolling}{length\ of\ electrode\ sheet\ before\ rolling}.$$

The viscosity $\mu$ of the slurry used for the positive active material layer may be measured by a viscometer.

In some embodiments, FD is 2.4 g/cc to 2.6 g/cc, $D_{v50}$ is 0.6 $\mu$m to 1.2 $\mu$m, LT≤1%, and $\mu$ is 3 k.Pa.s to 10 k.Pa.s. In the design process of the positive electrode sheet, FD, $D_{v50}$, LT, and $\mu$ are controlled within the above value ranges, so that the compaction density PD of the obtained electrode sheet may be kept within a reasonable range, and improvement effects on the performance of electrode sheet flexibility, breakage, and peeling force are achieved.

Another embodiment of the disclosure provides a method for designing a positive electrode sheet, and at least the following steps are included.

An active material is prepared into a slurry, the slurry is coated on at least one side of a positive current collector, dried, and roll pressed to form a positive electrode sheet, and a current compaction density of a positive active material layer on the positive electrode sheet is measured and calculated.

Based on a powder compaction density and a powder particle size of the active material, a viscosity of the slurry, and a length direction elongation rate of the positive electrode sheet under 15 tons of pressure, a target compaction density of the positive active material layer on the positive electrode sheet is calculated according to the following relational expression (2):

$$PD=FD+D_{v50}{}^2*LT*\mu^{1/2}/20 \qquad (2).$$

According to the current compaction density of the positive active material layer and comparing it with the target compaction density, process parameters for preparing the positive electrode sheet are adjusted based on a comparison result until the current compaction density of the positive active material layer reaches 97% to 100% of the target compaction density. That is, the current compaction density of the positive active material layer equals the target compaction density, or a difference between the current compaction density of the positive active material layer and the target compaction density is not lower than 3% of the target compaction density.

In the process of preparing the positive electrode sheet, data of FD, $D_{v50}$, LT, and $\mu$ may be collected, and a theoretical maximum PD value may be predicted in advance according to the above relational expression (2). Further, by adjusting the process of preparing the electrode sheet, the actual PD is made comparable to the theoretical PD, so that the prepared positive electrode sheet exhibits balanced performance in flexibility, breakage, and peeling force and exhibits enhanced processability and safety and improved wettability to the electrolyte. The secondary battery is thus enabled to have good electrochemical performance.

In some embodiments, the method for designing the positive electrode sheet further includes the following. The active material is selected according to a predetermined powder compaction density requirement and/or a predetermined powder particle size requirement. Exemplarily, the predetermined powder compaction density requirement is $2.4 \, g/cc \leq FD \leq 2.6 \, g/cc$, and the predetermined powder particle size requirement is $0.6 \, \mu m \leq D_{v50} \leq 1.2 \, \mu m$.

In some embodiments, the method for designing the positive electrode sheet further includes the following. The active material is prepared into the slurry according to a predetermined viscosity requirement. Exemplarily, the predetermined viscosity requirement is $3 \, k.Pa.s \leq \mu \leq 10 \, k.Pa.s$.

In some embodiments, the method for designing the positive electrode sheet further includes the following. The active material is prepared into the slurry, the slurry is coated on at least one side of the positive current collector, dried, and roll pressed into the positive electrode sheet according to a predetermined length direction elongation rate requirement. Further, in some embodiments, the method for designing the positive electrode sheet further includes the following. According to a current length direction elongation rate of the positive electrode sheet under 15 tons of pressure and comparing it with a predetermined length direction elongation rate, the process parameters for preparing the positive electrode sheet are adjusted based on a comparison result until the current compaction density of the positive active material layer reaches 97% to 100% of the target compaction density. Exemplarily, the predetermined length direction elongation rate requirement is $LT \leq 1\%$.

In some embodiments, the process parameters for preparing the positive electrode include at least one of the following parameters: a rolling pressure, a rolling thickness, and a coating surface density. These parameters also have relatively important effects on the process of preparing the positive electrode sheet and the performance of the prepared positive electrode sheet, need to be focused on during the process of designing the positive electrode sheet, and may be adjusted according to actual needs.

Another embodiment of the disclosure provides an electrode assembly including the positive electrode sheet as described above or a positive electrode sheet designed by the method as described above.

Another embodiment of the disclosure provides a secondary battery including the electrode assembly as described above.

Another embodiment of the disclosure provides a method for evaluating performance of a positive electrode sheet including a positive current collector and a positive active material layer on at least one side of the positive current collector. A theoretical compaction density of the positive active material layer is calculated according to the above relational expression (2), a current compaction density of the positive active material layer on the positive electrode sheet is measured and calculated, the performance of the positive electrode sheet is determined to be good if the current compaction density reaches 97% to 100% of the theoretical compaction density, and the performance of the positive electrode sheet is determined to be poor if the current compaction density does not reach or exceeds 97% to 100% of the theoretical compaction density.

In some embodiments, the positive electrode sheet is processed by coating, for example, uniformly coating the slurry on the positive current collector, and preparing the positive electrode sheet through processes such as baking, rolling, and slitting. In other embodiments, the positive electrode sheet may also be obtained by selecting any other method for forming the positive electrode sheet.

In some embodiments, the slurry used for preparing the positive electrode sheet as described above includes a positive active material, a dispersant, a binder, a conductive agent, and a solvent, etc., and a mass ratio of the positive active material, the dispersant, the binder, and the conductive agent may be, for example, 85 to 98:0.25 to 5:0.25 to 5:0.5 to 5. A solid content of the slurry may be, for example, $65\% \pm 2\%$, which may be specifically adjusted according to the differences in the selected materials. The positive active material may be selected from lithium iron phosphate materials, ternary materials, lithium cobalt oxide, etc., for example, lithium nickel manganese oxide, lithium cobalt oxide, lithium nickel oxide, lithium manganese oxide, lithium nickel manganese oxide, lithium nickel cobalt manganese oxide, or lithium nickel cobalt aluminum oxide, etc. Further, in some embodiments, the positive active material is selected from lithium iron phosphate materials, with a chemical formula of $Li_xFe_yM_{1-y}PO_4$, where M is selected from at least one of Mn, Ni, Cr, Zr, Ca, Mg, Cu, Ti, Al, Mo, W, or Zn, etc., $0.9 < x < 1.1$, $0.65 \leq y \leq 1.0$, so as to improve an energy density and cycle life of the lithium-ion secondary battery. The dispersant is selected from, for example, polyvinylpyrrolidone (PVP), polyethylene glycol (PEG), polymer block copolymers containing acidic groups, sodium salt polymers, etc., where the polymer block copolymers containing acidic groups may be, for example, styrene-maleic anhydride copolymers, acrylic polymers, etc. The binder is selected from, for example, any one or more of polyvinylidene fluoride (PVDF), poly (ethylene oxide) (PEO), polyamide (PA), polyacrylonitrile (PAN), polyacrylate, polyvinylether, polymethyl methacrylate (PMMA), ethylene-propylene-diene terpolymer (EPDM), polyhexafluoropropylene, or polymerized styrene butadiene rubber (SBR), etc. The conductive agent is selected from, for example, any one or more of conductive carbon black (super P), acetylene black, carbon nanotubes, graphene, etc., or other compounds that may enhance conductivity. The solvent is selected from, for example, N-methylpyrrolidone (NMP), etc.

In some embodiments, the positive current collector is, for example, a metal foil material such as nickel, titanium, aluminum, silver, stainless steel, etc., a metal foil material with functional layers such as carbon layers coated on the surface, or a polymer composite metal foil material. A thickness of the positive current collector is, for example, 8 $\mu$m to 15 $\mu$m, and a single-side coating thickness of the positive active material layer is, for example, 20 $\mu$m to 100 $\mu$m. Further, in a specific embodiment, the positive current collector is, for example, carbon-coated aluminum foil.

In some embodiments, the secondary battery is a lithium-ion battery including an electrolyte, an outer casing, and a bare cell disposed within the outer casing. The bare cell includes the positive electrode sheet as described above and further includes a separator and a negative electrode sheet.

In a specific embodiment, a method for preparing the lithium-ion battery includes the following steps. A positive electrode sheet, a separator, and a negative electrode sheet are stacked sequentially to ensure that a separator is provided between any positive electrode sheet and negative electrode sheet. A multi-layered stack is obtained through winding, which is placed into the battery outer casing as a bare cell. Finally, an electrolyte is injected into the outer casing once or several times, so that the bare cell is completely immersed in the electrolyte. In other words, the electrolyte is injected and fills the entire internal space of the battery, and the positive electrode sheet, the separator, and the negative electrode sheet are completely wetted in the electrolyte.

In some embodiments, the negative electrode sheet in the above embodiments and/or examples includes a negative current collector and a negative active material layer on at least one side of the negative current collector. Herein, the negative current collector is selected from, for example, any one of a copper foil current collector, a composite copper foil current collector, a carbon current collector, a foam copper current collector, or a stainless steel current collector, etc. A thickness of the negative current collector is, for example, 8 $\mu$m to 15 $\mu$m, and a single-side coating thickness of the negative active material layer is, for example, 10 $\mu$m to 80 $\mu$m. In a specific embodiment, the negative current collector is selected as, for example, copper foil, the thickness of the copper foil is, for example, 13$\mu$m, and the single-side coating thickness of the negative active material layer is, for example, 50 $\mu$m.

In some embodiments, the negative active material layer includes a negative active material, a conductive agent, a binder, and a thickener, etc., a mass ratio of the negative active material, the conductive agent, the binder, and the thickener may be, for example, 90 to 96:1 to 2:1 to 3:2 to 5. Herein, the negative active material is a compound capable of intercalating-deintercalating lithium ions, for example, including at least one of graphite, soft carbon, hard carbon, artificial graphite, natural graphite, silicon, a silicon oxide compound ($SiO_x$, 0<x<2), a silicon carbon compound, or lithium titanate. The conductive agent is selected from, for example, any one or more of conductive carbon black, acetylene black, Ketjen black, carbon nanotubes, and graphene, etc. The binder is, for example, selected from any one or more of polyvinylidene fluoride, polyethylene oxide, polyamide, polypropylene, polyacrylate, polyvinyl ether, polymethyl methacrylate, polyhexafluoropropylene, or styrene-butadiene rubber, etc. The thickener is, for example, selected as carboxymethyl cellulose sodium (CMC-Na), etc.

In a specific embodiment, the negative active material is selected from, for example, graphite, the conductive agent is selected from, for example, acetylene black, the binder is selected from, for example, styrene-butadiene rubber, and the thickener is selected from, for example, carboxymethyl cellulose sodium. The negative active material, the conductive agent, the binder, and the thickener are mixed according to a mass ratio of 96:2:1:1, added with deionized water, and mixed uniformly under the function of a vacuum mixer, and a negative slurry is obtained. The negative slurry is then coated on copper foil, dried at room temperature, and then transferred to an oven for drying, and the negative terminal sheet is obtained through processes such as cold pressing and cutting. In other embodiments, the negative electrode sheet may also be obtained by selecting any other method for forming the negative electrode sheet.

In some embodiments, the electrolyte includes electrolyte lithium salt, a solvent, and an additive. In the secondary battery, the electrolyte conducts ions, provides ion channels, and maintains chemical stability. Various components in the electrolyte may be classified into an electrolyte lithium salt, the solvent, and the additive according to their functions and amounts. The lithium salt is mainly used to provide lithium ions to form the ion channels. In the entire electrochemical system of the battery, the directional movement of the lithium ions and electrons generates electricity. The lithium salt has a significant impact on the energy density, power density, wide electrochemical window, cycle life, and safety performance of the lithium battery. The solvent is used to dissolve the lithium salt and the additive therein. The additive, as substances added in small amounts to the electrolyte, are diverse in type and each serves different functions, for example, they can provide different improvement effects on the high- and low-temperature performance, cycling performance, and film-forming performance of the battery.

In some embodiments of the disclosure, the electrolyte lithium salt is selected from at least one of lithium hexafluorophosphate, lithium bis(fluorosulfonyl)imide, lithium bis(trifluoromethyl)sulfonylimide, lithium acetate, lithium methanesulfonate, or lithium trifluoromethanesulfonate. Further, based on a total mass of the electrolyte, a mass percentage of the electrolyte lithium salt is 12% to 16%. In the disclosure, the type of the lithium salt is not limited, and a single lithium salt or mixed lithium salts may be used.

In some embodiments, the solvent is selected from at least one of a carbonate solvent, a carboxylate solvent, an ether solvent, or a nitrile solvent, and based on the total mass of the electrolyte, the mass percentage of the solvent is 70% to 80%. Herein, the carbonate solvent is selected from, for example, ethylene carbonate, ethylene carbonate, propylene carbonate, dimethyl carbonate, diethyl carbonate, ethyl methyl carbonate, fluoroethylene carbonate, polycarbonate, etc. The carboxylate solvent is selected from, for example, ethyl formate, ethyl acetate, propyl acetate, ethyl propionate, propyl propionate, etc. The ether solvent is selected from, for example, ethylene glycol dimethyl ether, diethylene glycol diethyl ether, etc. The nitrile solvent is selected from, for example, acetonitrile, propionitrile, butyronitrile, valeronitrile, etc. In the disclosure, the type of solvent is not limited, and a single solvent or mixed solvents may be used.

In some embodiments, the additive is selected from at least one of vinylene carbonate (virtual console, VC), methylene methanedisulfonate (MMDS), propylene sulfite (PS), 1,3,2-dioxathiolane 2,2-dioxide (DTD), and ethylene sulfite (ES). Further, based on the total mass of the electrolyte, a mass percentage of the additives is 0.1% to 5%. In the disclosure, the type of the additive is not limited, and a single additive or mixed additives may be used.

In some embodiments, the separator is, for example, a polyethylene (PE) film, a polypropylene (PP) film, a glass fiber film, or a composite film, etc., and a thickness of the separator is, for example, 9 $\mu$m to 15 $\mu$m.

The following specific examples are given to illustrate the disclosure in detail. It should also be understood that the following examples are only used to specifically illustrate the disclosure and should not be construed as limiting the protection scope of the disclosure. Some non-essential improvements and adjustments made by a person having ordinary skill in the art based on the above contents of the disclosure all belong to the protection scope of the disclosure. The specific process parameters and the like in the following examples are only examples of suitable ranges. That is, a person having ordinary skill in the art can make a selection within a suitable range through the description herein, and are not limited to the specific numerical values exemplified below.

Example 1

The method for preparing the positive electrode sheet described in the above embodiments includes the following steps.

S1: Preparation of positive electrode slurry: the positive active material was selected as lithium iron phosphate (LFP) with FD of 2.53 g/cc and $D_{v50}$ of 0.81 $\mu$m, the binder was selected as PVDF, the conductive agent was selected as conductive carbon black, and the dispersant was selected as a styrene-maleic anhydride copolymer solution. LFP, PVDF, and the conductive agent were added first, and dry mixed for 35 minutes to disperse them evenly. Then, the solvent NMP was added and mixed and stirred for 40 minutes. After that, the dispersant was added and stirred for another 200 minutes to disperse the slurry evenly. The amount of NMP was adjusted to control the final viscosity of the slurry to be maintained at 6 kPa.s and the solid content of the slurry to be 65%.

S2: A coating surface density of 241.9 mg/1540.25 mm$^2$ and a design capacity of 80Ah were selected. The slurry obtained in step S1 was coated on 13$\mu$m carbon-coated aluminum foil, and then baked, dried, and roll pressed into a positive electrode sheet.

The positive electrode sheet prepared in this embodiment has LT of 0.8%, theoretical PD of 2.59 g/cc, and actual PD of 2.59 g/cc.

According to the method of Example 1, FD, $D_{v50}$, the solid content, $\mu$, LT, and the aluminum foil thickness were adjusted according to Table 1, and positive electrode sheets corresponding to Examples 2 to 9 and Comparative Examples 1 to 9 were prepared and obtained respectively.

The positive electrode sheets of Examples 1 to 9 and Comparative Examples 1 to 9 were assembled into lithium-ion batteries. The negative electrode was made of graphite, the separator was a PE separator, the electrolyte was a carbonate electrolyte, the lithium salt was LiPF6, and the rated capacity was 80Ah. The performance of the positive electrode sheets and the lithium-ion batteries was tested according to the following methods, and the test results are shown in Table 2.

Test Method:

1. Flexibility test:

A positive electrode sheet after rolling was cut into a circular sheet with an area of 20 cm$^2$. It was folded once and then folded in the opposite direction along the crease. This was counted as one fold. This process was repeated multiple times until the circular sheet showed light transmission in the middle.

2. Capacity and lithium plating test:

The cells were first discharged at a constant current of 0.33C to 2.0V, then charged at a constant current of 0.33C to 3.65V, kept constant at 0.05C, and finally discharged at a constant current of 0.33C to 2.0V. The discharge capacity was recorded. The initial charge/discharge temperature was 25°C. Twenty-five cells were tested in each group, and the average value was calculated. After the test, five cells were selected for disassembly to observe whether lithium plating occurred.

3. Peeling force test:

A piece of double-sided tape, approximately 10 cm x 2 cm in length, was attached to a stainless steel plate along one marked line. The prepared sample was then attached to the other side of the double-sided tape in the marked order. A roller was used to roll the sample once in the electrode direction, and the rolling parameters were: pressure: 50 N and time: 3 s. The tested sample was then placed on the measuring platform (universal tensile testing machine), fixed in place, and the test was started. Relatively stable data were collected to calculate the average value. Peeling force = average value (mN) / sampling width (mm). 10 tests were performed, and the average value was calculated.

Table 1

| Electrode Sheet | FD(g/cc) | Dv50 ($\mu$m) | Solid Content | Viscosity $\mu$(k.Pa.s) | LT(%) | Aluminum Foil Thickness ($\mu$m) | Theoretical PD | Actual PD |
|---|---|---|---|---|---|---|---|---|
| Example 1 | 2.53 | 0.81 | 65 | 6 | 0.8 | 13 | 2.59 | 2.59 |
| Example 2 | 2.60 | 0.81 | 65 | 6 | 0.8 | 13 | 2.66 | 2.64 |
| Example 3 | 2.40 | 0.81 | 65 | 6 | 0.8 | 13 | 2.46 | 2.45 |
| Example 4 | 2.53 | 0.61 | 65 | 6 | 0.8 | 13 | 2.57 | 2.56 |
| Example 5 | 2.53 | 1.20 | 65 | 6 | 0.8 | 13 | 2.67 | 2.63 |
| Example 6 | 2.53 | 0.81 | 63 | 3 | 0.8 | 13 | 2.58 | 2.54 |
| Example 7 | 2.53 | 0.81 | 67 | 10 | 0.8 | 13 | 2.61 | 2.60 |
| Example 8 | 2.53 | 0.81 | 65 | 6 | 0.6 | 15 | 2.58 | 2.57 |
| Example 9 | 2.53 | 0.81 | 65 | 6 | 1.0 | 12 | 2.61 | 2.59 |
| Comparative Example 1 | 2.3 | 0.81 | 65 | 6 | 0.8 | 13 | 2.36 | 2.35 |
| Comparative Example 2 | 2.65 | 0.81 | 65 | 6 | 0.8 | 13 | 2.71 | 2.69 |
| Comparative Example 3 | 2.53 | 0.42 | 65 | 6 | 0.8 | 13 | 2.55 | 2.51 |
| Comparative Example 4 | 2.53 | 1.39 | 65 | 6 | 0.8 | 13 | 2.72 | 2.67 |
| Comparative Example 5 | 2.53 | 0.81 | 62 | 1 | 0.8 | 13 | 2.56 | 2.54 |
| Comparative Example 6 | 2.53 | 0.81 | 68 | 12 | 0.8 | 13 | 2.62 | 2.59 |
| Comparative Example 7 | 2.53 | 0.81 | 65 | 6 | 1.2 | 10 | 2.63 | 2.60 |
| Comparative Example 8 | 2.53 | 0.81 | 65 | 6 | 0.8 | 13 | 2.59 | 2.63 |
| Comparative Example 9 | 2.3 | 1.39 | 62 | 1 | 1.2 | 10 | 2.42 | 2.40 |

Table 2

| Electrode Sheet | Flexibility Test | Number of Breakages (1000m) | Capacity (Ah) | Lithium Plating | Peeling Force (N/m) |
|---|---|---|---|---|---|
| Example 1 | 3-fold light transmission | 0 | 81.3 | no | 14.8 |
| Example 2 | 3-fold light transmission | 0 | 81.1 | no | 16.4 |
| Example 3 | 3-fold light transmission | 0 | 81.7 | no | 16.2 |
| Example 4 | 3-fold light transmission | 0 | 81.9 | no | 14.5 |
| Example 5 | 3-fold light transmission | 0 | 80.8 | no | 16.8 |
| Example 6 | 3-fold light transmission | 0 | 81.4 | no | 14.1 |
| Example 7 | 3-fold light transmission | 0 | 81.2 | no | 15.3 |
| Example 8 | 3-fold light transmission | 0 | 81.8 | no | 14.5 |
| Example 9 | 3-fold light transmission | 0 | 81.2 | no | 15.1 |
| Comparative Example 1 | 3-fold light transmission | 0 | 81.5 | no | 11.3 |
| Comparative Example 2 | 1-fold light transmission | 6 | 76.5 | no | 18.3 |
| Comparative Example 3 | 3-fold light transmission | 0 | 81.5 | no | 11.4 |
| Comparative Example 4 | 3-fold light transmission | 0 | 79.5 | no | 13.6 |
| Comparative Example 5 | 3-fold light transmission | 0 | 80.5 | no | 5.5 |
| Comparative Example 6 | 3-fold light transmission | 0 | 79.9 | no | 18.1 |
| Comparative Example 7 | 1-fold light transmission | 23 | 76.4 | yes | 16.3 |
| Comparative Example 8 | 3-fold light transmission | 2 | 75.2 | yes | 15.5 |
| Comparative Example 9 | 2-fold light transmission | 18 | 72.3 | yes | 4.9 |

From the data in Table 1 and Table 2, the following conclusions may be analyzed.

In Examples 1 to 9, the actual PD of the positive electrode sheet is slightly smaller than the theoretical PD and not less than 97% of the theoretical PD or equal to the theoretical PD, while the actual PD of the positive electrode sheet in Comparative Example 8 is greater than the theoretical PD, exceeding the reasonable range. As such, the number of breakages increases, battery capacity is reduced, and lithium plating occurs, so battery performance deteriorates.

Further analysis of Examples 1 to 9 and Comparative Examples 1 to 7 and 9 reveals that the PD of the positive electrode sheet may be affected by FD, $D_{v50}$, $\mu$, and LT. Further, FD, $D_{v50}$, $\mu$, and LT all have positive correlation relationships with PD. Controlling FD, $D_{v50}$, $\mu$, and LT within specific ranges is beneficial for improving and enhancing the performance of the electrode sheet and the battery.

Comparing Examples 1 to 3 with Comparative Examples 1 to 2, it may be seen that as the FD of the LFP material increases, the PD of the positive electrode sheet also increases accordingly. However, excessively low FD may result in low peeling force of the electrode sheet, while excessively high FD may result in poor flexibility and frequent breakage. As such, the processing difficulty is increased, the scrap rate is raised, the battery capacity may thus be decreased, the lithium plating phenomenon may occur, and the battery performance thereby is degraded. Therefore, the optimal range for FD is 2.4 g/cc to 2.6 g/cc.

Comparing Examples 1, 4, and 5 with Comparative Examples 3 to 4, it may be seen that as the $D_{v50}$ of the LFP material increases, the PD of the positive electrode sheet also increases accordingly. However, excessively low $D_{v50}$ may also result in low peeling force of the electrode sheet, while excessively high $D_{v50}$ may result in reduced battery capacity. Therefore, the optimal range for $D_{v50}$ is 0.6 $\mu$m to 1.2 $\mu$m.

Comparing Examples 1, 6, and 7 with Comparative Examples 5 to 6, it may be seen that the slurry solid content and the viscosity have a positive correlation relationship. Meanwhile, as the slurry viscosity increases, the PD of the positive electrode sheet also increases accordingly. However, excessively low viscosity may also result in low peeling force of the electrode sheet, while excessively high viscosity may result in uneven slurry dispersion and increased processing difficulty. Therefore, the optimal range for viscosity is 3 k.Pa.s to 10 k.Pa.s.

Comparing Examples 1, 8, and 9 with Comparative Example 7, it may be seen that the LT and the aluminum foil thickness have a negative correlation relationship. Meanwhile, as the LT increases, the PD of the positive electrode sheet also increases accordingly. However, when the LT exceeds 1%, it may result in poor flexibility of the electrode sheet and frequent breakage. As such, the processing difficulty is increased, and the scrap rate is raised. Therefore, the optimal range for LT is ≤1%.

**Claims**

1. A positive electrode sheet, comprising a positive current collector and a positive active material layer on at least one side of the positive current collector, wherein the positive active material layer satisfies the following relational expression:

$$0.97(FD+D_{v50}^2*LT*\mu^{1/2}/20)\leq PD \leq FD+D_{v50}^2*LT*\mu^{1/2}/20,$$

wherein PD is a compaction density of the positive active material layer in g/cc, FD is a powder compaction density of an active material in the positive active material layer in g/cc, $D_{v50}$ is a value below which 50% of a powder particle size of the active material in the positive active material layer is less than or equal to in $\mu$m, LT is a length direction elongation rate of the positive electrode sheet under 15 tons of pressure in percentage, and $\mu$ is a viscosity of a slurry used for preparing the positive active material layer in k.Pa.s.

2. The positive electrode sheet according to claim 1, wherein the FD is 2.4 g/cc to 2.6 g/cc, and/or the $D_{v50}$ is 0.6 $\mu$m to 1.2 $\mu$m.

3. The positive electrode sheet according to claim 1, wherein the LT≤1%, and/or the $\mu$ is 3 k.Pa.s to 10 k.Pa.s.

4. A method for designing a positive electrode sheet, at least comprising:

   preparing an active material into a slurry, coating the slurry on at least one side of a positive current collector, drying and roll pressing the slurry to form a positive electrode sheet, and measuring and calculating a current compaction density of a positive active material layer on the positive electrode sheet;
   based on a powder compaction density and a powder particle size of the active material, a viscosity of the slurry, and a length direction elongation rate of the positive electrode sheet under 15 tons of pressure, calculating a target compaction density of the positive active material layer on the positive electrode sheet according to the following relational expression:

$$PD=FD+D_{v50}^2*LT*\mu^{1/2}/20,$$

   wherein PD is a compaction density of the positive active material layer in g/cc, FD is the powder compaction density of the active material in the positive active material layer in g/cc, $D_{v50}$ is a value below which 50% of a powder particle size of the active material in the positive active material layer is less than or equal to in $\mu$m, LT is the length direction elongation rate of the positive electrode sheet under 15 tons of pressure in percentage, and $\mu$ is the viscosity of the slurry used for preparing the positive active material layer in k.Pa.s; and
   according to the current compaction density of the positive active material layer and comparing it with the target compaction density, adjusting process parameters for preparing the positive electrode sheet based on a comparison result until the current compaction density of the positive active material layer reaches 97% to 100% of the target compaction density.

5. The method for designing the positive electrode sheet according to claim 4, further comprising:

   selecting the active material according to a predetermined powder compaction density requirement and/or a predetermined powder particle size requirement; and/or
   preparing the active material into the slurry according to a predetermined viscosity requirement; and/or
   preparing the active material into the slurry, coating the slurry on at least one side of the positive current collector, and drying and roll pressing the slurry into the positive electrode sheet according to a predetermined length direction elongation rate requirement.

6. The method for designing the positive electrode sheet according to claim 4, further comprising:
   according to a current length direction elongation rate of the positive electrode sheet under 15 tons of pressure and comparing it with a predetermined length direction elongation rate, adjusting the process parameters for preparing the positive electrode sheet based on a comparison result until the current compaction density of the positive active material layer reaches 97% to 100% of the target compaction density.

7. The method for designing the positive electrode sheet according to any one of claims 4 to 6, wherein: the process parameters for preparing the positive electrode sheet comprise at least one of the following parameters: a rolling pressure, a rolling thickness, and a coating surface density.

8. An electrode assembly, comprising the positive electrode sheet according to any one of claims 1 to 3 or the positive electrode sheet designed according to the method of any one of claims 4 to 7.

9. A secondary battery, comprising the electrode assembly according to claim 8.

10. A method for evaluating performance of a positive electrode sheet comprising a positive current collector and a positive active material layer on at least one side of the positive current collector, the method comprising: calculating a theoretical compaction density of the positive active material layer according to the following relational expression, measuring and calculating a current compaction density of the positive active material layer on the positive electrode sheet, determining that the performance of the positive electrode sheet is good if the current compaction density reaches 97% to 100% of the theoretical compaction density, and determining that the performance of the positive electrode sheet is poor if the current compaction density does not reach or exceeds 97% to 100% of the theoretical compaction density:

$$PD = FD + D_{v50}^2 * LT * \mu^{1/2} / 20,$$

wherein PD is a compaction density of the positive active material layer in g/cc, FD is a powder compaction density of an active material in the positive active material layer in g/cc, $D_{v50}$ is a value below which 50% of a powder particle size of the active material in the positive active material layer is less than or equal to in $\mu$m, LT is a length direction elongation rate of the positive electrode sheet under 15 tons of pressure in percentage, and $\mu$ is a viscosity of a slurry used for preparing the positive active material layer in k.Pa.s.

Europäisches
Patentamt

European
Patent Office

Office européen
des brevets

# EUROPEAN SEARCH REPORT

**Application Number**

EP 25 22 2571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 407 715 A1 (CONTEMPORARY AMPEREX TECHNOLOGY CO LTD [CN] ET AL.) 31 July 2024 (2024-07-31) * paragraph [0003] - paragraph [0004] * * paragraph [0021] * * paragraph [0023] * * paragraph [0083] - paragraph [0084] * * paragraph [0108] * * paragraph [0112] * * paragraph [0114] * ----- | 1-10 | INV. H01M4/58 H01M4/04 H01M4/139 H01M10/052 |
| A | KR 2024 0101121 A (LG ENERGY SOLUTION LTD [KR]) 2 July 2024 (2024-07-02) * paragraph [0123]; claims 1-11 * ----- | 1-10 | |

TECHNICAL FIELDS
SEARCHED      (IPC)

H01M

The present search report has been drawn up for all claims

| Place of search | Date of completion of the search | Examiner |
|---|---|---|
| Munich | 22 May 2026 | Kuhn, Tanja |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 2571

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2026

| Patent document cited in search report | | Publication date | Patent family member(s) | | Publication date |
|---|---|---|---|---|---|
| EP 4407715 | A1 | 31-07-2024 | CN | 119497917 A | 21-02-2025 |
| | | | EP | 4407715 A1 | 31-07-2024 |
| | | | JP | 2024545384 A | 06-12-2024 |
| | | | KR | 20240070528 A | 21-05-2024 |
| | | | US | 2024243266 A1 | 18-07-2024 |
| | | | WO | 2024098370 A1 | 16-05-2024 |
| KR 20240101121 | A | 02-07-2024 | NONE | | |

EPO FORM P0459

For more details about this annex : see Official Journal of the European Patent Office, No. 12/82